# FASCICULE DE BREVET EUROPEEN

(11) **EP 0 824 506 B1**
(45) Date de publication et mention de la délivrance du brevet: **09.06.1999**
(21) Numéro de dépôt: 96915080.4
(22) Date de dépôt: 24.04.1996
(51) Int. Cl.: C04B 11/05, C04B 11/028, F27B 9/24, C04B 28/16

(54) **PROCEDE ET INSTALLATION DE TRAITEMENT D'UNE MATIERE PULVERULENTE A BASE DE SULFATE DE CALCIUM, NOUVEAU LIANT HYDRAULIQUE**
VERFAHREN UND VORRICHTUNG ZUR BEHANDLUNG VON PULVERFÖRMIGEM KALZIUMSULFATMATERIAL UND NEUES HYDRAULISCHES BINDEMITTEL
PROCESSING EQUIPMENT AND METHOD FOR A PULVERULENT CALCIUM SULPHATE MATERIAL AND NOVEL HYDRAULIC BINDER

(30) Priorité: 25.04.1995 FR 9505189
(43) Date de publication de la demande: 25.02.1998
(73) Titulaire: Dussel, Christian, F-31150 Lespinasse (FR)
(72) Inventeur: Dussel, Christian, F-31150 Lespinasse (FR)
(74) Mandataire: Hautier, Jean-Louis
(86) Numéro de dépôt international: FR9600622
(87) Numéro de publication internationale: WO9633957

(56) Documents cités:
- WO-A-90/08111
- WO-A-94/15161
- FR-A- 2 572 721
- GB-A- 824 074
- US-A- 3 145 980
- W.GERHARTZ; Y.S.YAMAMATO: "ULLMANN'S ENCYCLOPEDIA OF INDUSTRIAL CHEMISTRY" , VOLUME A4, WEINHEIM,VCH , DE XP002011750 voir page 556 - page 559 voir page 569
- SYNDICAT NATIONAL DES INDUSTRIES DU PL TRE: "LE PL TRE Physico-chimie, Fabrication et Emplois" , EYROLLES , PARIS,FR XP002011751 voir page 90, alinéa 1.3 - page 91, alinéa 1.5
- CHEMICAL ABSTRACTS, vol. 120, no. 22, 30 Mai 1994 Columbus, Ohio, US; abstract no. 278471, TROEV, T. ET AL: "Dehydration products of gypsum: positron annihilation and dielectric measurements" XP002011752 & J. MATER. SCI. (1994), 29(4), 865-9 CODEN: JMTSAS;ISSN: 0022-2461,
- CHEMICAL ABSTRACTS, vol. 116, no. 18, 4 Mai 1992 Columbus, Ohio, US; abstract no. 179826, PENG, WENSHI ET AL: "Infrared spectra of gypsum and its thermal transformation products" XP002011753 & KUANGWU XUEBAO (1991), 11(1), 27-32 CODEN: KUXUEN;ISSN: 1000-4734,

## Description

L'invention concerne un procédé de traitement d'une matière première pulvérulente à base de sulfate de calcium naturel (gypse) ou de synthèse (sulfogypse, phosphogypse et autres sous-produits du même type) en vue de préparer un nouveau liant hydraulique. Elle s'étend à une installation permettant la mise en oeuvre du procédé, ainsi qu'aux liants hydrauliques susceptibles d'être fabriqués par le procédé.

Plusieurs types de procédés de traitement de sulfate de calcium ont été proposés pour préparer du plâtre. En particulier, on sait préparer des plâtres améliorés (désignés parfois par "plâtres α") qui, une fois durcis, présentent des caractéristiques mécaniques notablement plus élevées que celles des plâtres courants. Les phénomènes qui se déroulent au cours des traitements sont mal connus et l'on attribue généralement l'amélioration des performances mécaniques à la présence de la variété cristallographique a dans les produits obtenus, sans que l'on connaisse exactement la proportion de cette variété dans ces produits ni les conditions qui permettent de l'obtenir de façon stable et reproductible.

De façon traditionnelle, ces plâtres améliorés sont fabriqués à partir de gypse en soumettant celui-ci à une phase de cuisson par voie humide en autoclave, puis à une phase de séchage à chaud par un courant d'air chaud et sec. La cuisson s'effectue en atmosphère de vapeur saturante à une pression de l'ordre de 5 à 10 bars pendant une durée de l'ordre de 10 heures.

Pour tenter de pallier les défauts de ce procédé traditionnel de fabrication de plâtre amélioré (mise en oeuvre extrêmement couteuse, reproductibilité incertaine), on a proposé d'autres procédés qui, en fait, essayent de reproduire les conditions essentielles du procédé traditionnel (cuisson par voie humide, suivie d'un séchage par air chaud) en utilisant des moyens et des technologies différents (brevets FR 2.389.855, FR 2.445.940, FR 2.572.721, US 2.269.580, US 3.145.980).

La présente invention vise à fournir un nouveau procédé de traitement qui conduise à un nouveau liant hydraulique parfaitement caractérisé, bénéficiant, une fois durci, de remarquables performances, en particulier tenue au feu et résistances mécaniques notamment en immersion totale.

Un autre objectif de l'invention est de fournir une installation permettant de mettre en oeuvre ce procédé dans des conditions économiques.

Le procédé visé par l'invention pour traiter une matière première pulvérulente à base de sulfate de calcium en vue de préparer un nouveau liant hydraulique est caractérisé en ce qu'il combine les deux étapes successives suivantes :
(a) on chauffe la matière pulvérulente à une température sensiblement comprise entre 220°C et 360°C en présence de vapeur d'eau dans des conditions appropriées pour former majoritairement du sulfate de calcium de variété a,
(b) on fait subir à la matière ainsi chauffée une trempe thermique consistant à la refroidir d'au moins 150°C en un temps inférieur à 15 minutes au moyen d'un gaz froid et sec injecté sous pression au coeur de celle-ci.

Par "gaz froid et sec", on entend un gaz dont la température est inférieure à environ 50°C (préférentiellement température ambiante de l'ordre de 20°C à 30°C ou température inférieure à celle-ci) et dont la teneur en vapeur d'eau est inférieure à environ 5 % (masse de vapeur rapportée à la masse totale de gaz) préférentiellement inférieure à 1 %.

Le procédé de l'invention a été conçu à partir de l'observation suivante : lorsqu'un sulfate de calcium est traité de façon habituelle pour obtenir du "plâtre amélioré", le produit obtenu est en fait un mélange qui contient effectivement de l'anhydrite a mais dans lequel cette variété demeure très minoritaire et est mélangée à d'autres formes anhydres (anhydrite y) ou hydratées (semihydratés, bihydrates, ...). Les études de l'inventeur ont montré que ceci provient essentiellement de deux facteurs : une cuisson conduisant à l'anhydrite α mais aussi aux autres formes, et surtout une évolution du produit après la cuisson, avec transformation partielle de celui-ci notamment par réhydratation. L'idée essentielle ayant conduit au procédé de l'invention a été de réaliser un produit final stable contenant une proportion pondérale d'anhydrite a beaucoup plus élevée que celle contenue dans les plâtres améliorés connus et, pour ce faire, de figer la structure du composé obtenu à l'issue de la cuisson par une trempe thermique. On limite ainsi considérablement la transformation ultérieure de l'anhydrite a formé par la cuisson.

L'opération de trempe est de préférence mise en oeuvre de façon à amener la matière chauffée par la cuisson à une température inférieure à 100°C en un temps compris entre 6 et 12 minutes. Elle peut être réalisée au moyen d'air comprimé froid et sec, injecté à plusieurs emplacements dans la matière en mouvement, le débit d'air étant ajusté pour obtenir la vitesse de refroidissement appropriée.

Selon un mode de mise en oeuvre préférentiel du procédé, à l'issue de l'opération de cuisson, la matière chauffée est envoyée en pluie d'un niveau supérieur à un niveau inférieur où elle est amenée par vibration à cheminer en lit ; l'opération de trempe est réalisée, d'une part, en envoyant un premier flux d'air froid et sec sur le rideau de matière tombant en pluie entre le niveau supérieur et le niveau inférieur, d'autre part, en injectant des flux d'air froid et sec au coeur du lit de matière en cours de cheminement au niveau inférieur.

Le nouveau liant hydraulique obtenu par le procédé précité est un mélange stable d'anhydrite α de sulfate de calcium et de bassanite, dans lequel la proportion pondérale d'anhydrite α est supérieure à 35 %, et en particulier comprise entre 40 % et 65 % ; ce mélange contient très peu ou pas d'anhydrite γ.

La composition de ce mélange et sa proportion élevée en anhydrite α conditionnent des caractéristiques remarquables des produits obtenus par prise du liant, en particulier :
- tenue au feu : inflammabilité classée dans la catégorie MO suivant la norme NF P 92-507,
- résistance à la compression : entre 250 et 300 bars
- résistance à la flexion : entre 55 et 70 bars.

Une explication de ces performances tient en partie au caractère soluble de l'anhydrite a et aux surfaces spécifiques plus élevées obtenues avec cette variété (aux environs de 6 m²/g) qui conduisent, lors de la mise en oeuvre du liant, à une précipitation rapide et homogène. Il est à noter que les produits obtenus en incorporant des charges classiques au liant conforme à l'invention, s'avèrent présenter des résistances mécaniques remarquables en situation immergée dans l'eau, beaucoup plus élevée que les produits analogues obtenus avec les plâtres améliorés connus.

Le concept inventif essentiel de l'invention a donc été d'accroître la proportion d'anhydrite α du produit, le moyen essentiel utilisé consistant à limiter, par une trempe, l'évolution du produit après cuisson. Pour accroître encore cette proportion en anhydrite α, l'inventeur s'est également attaché à optimiser l'opération de cuisson de façon à obtenir la quantité la plus importante possible de cette variété à l'issue de la cuisson.

Les conditions de mise en oeuvre suivantes paraissent fournir les meilleurs résultats : on contrôle, préalablement, le taux d'humidité de la matière première et on ajuste, le cas échéant, ce taux à une valeur sensiblement comprise entre 12 % et 25 % ; l'opération de cuisson est alors mise en oeuvre en amenant la matière pulvérulente à cheminer en lit agité dans une atmosphère gazeuse confinée contenant au moins une partie de la vapeur d'eau libérée par la matière, et en chauffant l'ensemble dans des conditions propres à élever la température des gaz au-dessus du lit de matière à une valeur comprise entre 400° et 500°C, et à porter la température moyenne au coeur de la matière à une valeur supérieure à 250°C et inférieure à 300°C. Le chauffage est en particulier réalisé au moyen de radiants infrarouges disposés au-dessus du lit de matière, la puissance d'émission desdits radiants étant régulée en corrélation avec la vitesse de cheminement du lit de matière pour obtenir les valeurs appropriées de la température des gaz au-dessus du lit et de la température au coeur de la matière.

Ces conditions de mise en oeuvre ont été définies de façon pragmatique au terme de longs tâtonnements et essais. Une explication possible des meilleurs résultats obtenus grâce à ces conditions opératoires est la suivante : la température de 250°-300°C au coeur du lit de matière est idéale pour produire l'anhydrite α en l'absence d'autres variétés ; la vapeur d'eau extraite s'échappe au-dessus du lit de matière dans une atmosphère plus chaude dont la température est supérieure à son point critique (365°C) : elle atteint très vite l'état supercritique ce qui évite (ou limite) une réhydratation et une évolution en surface de la matière de sorte qu'au terme de la cuisson, la proportion d'anhydrite α est très élevée (sans qu'il soit possible de donner des proportions précises puisque des prélèvements avant la trempe évoluent immédiatement). La proportion de bassanite qui est observée dans le liant hydraulique final provient essentiellement d'une certaine transformation de l'anhydrite α qui se produit au début de la trempe ; ce phénomène a pu être mis en évidence en étudiant le profil de température au cours du traitement : on observe en effet une légère montée en température de la matière au tout début de la trempe (15° à 20°) qui ne peut être expliquée que par la réaction de transformation exothermique de l'anhydrite α en bassanite ; mais cette transformation est très vite bloquée par la trempe qui stabilise l'anhydrite α. De plus, il semble que la trempe bloque complètement une évolution de l'anhydrite α vers l'anhydrite γ (insoluble ou peu soluble) qui ne se retrouve qu'à l'état de trace dans le produit final (contrairement aux liants connus qui comportent une forte proportion de cette variété).

L'invention s'étend à une installation permettant la mise en oeuvre du procédé défini précédemment. Cette installation comprend, en combinaison, un tunnel de cuisson ayant une extrémité amont et une extrémité aval, des moyens d'alimentation en matière première de l'extrémité amont dudit tunnel de cuisson, des goulottes longitudinales juxtaposées dans le tunnel de cuisson et aptes à contenir la matière, des peignes en un matériau conducteur de la chaleur insérés dans les goulottes et de forme adaptée pour diviser la masse de matière contenue dans celles-ci, des moyens réglables de mise en vibration desdites goulottes adaptés pour engendrer un cheminement de la matière de l'extrémité amont vers l'extrémité aval, des moyens de chauffage en particulier radiants, de puissance réglable, situés au-dessus des goulottes dans le tunnel de cuisson, un dispositif de refroidissement ayant une extrémité amont et une extrémité aval et situé à un niveau inférieur par rapport au tunnel de cuisson, un bac de forme allongée s'étendant dans le dispositif de refroidissement pour contenir la matière, des moyens réglables de mise en vibration dudit bac adaptés pour engendrer un cheminement de la matière de l'extrémité amont vers l'extrémité aval, des moyens de passage par gravité de la matière de l'extrémité aval du tunnel de cuisson dans l'extrémité amont du dispositif de refroidissement, des moyens d'injection d'air comprimé sec et froid au niveau des moyens de passage précités, des moyens d'injection d'air comprimé sec et froid dans le dispositif de refroidissement, et des moyens d'évacuation de la matière à l'extrémité aval du dispositif de refroidissement.

D'autres caractéristiques, buts et avantages de l'invention ressortiront de la description qui suit en référence aux dessins annexé ; sur ces dessins :

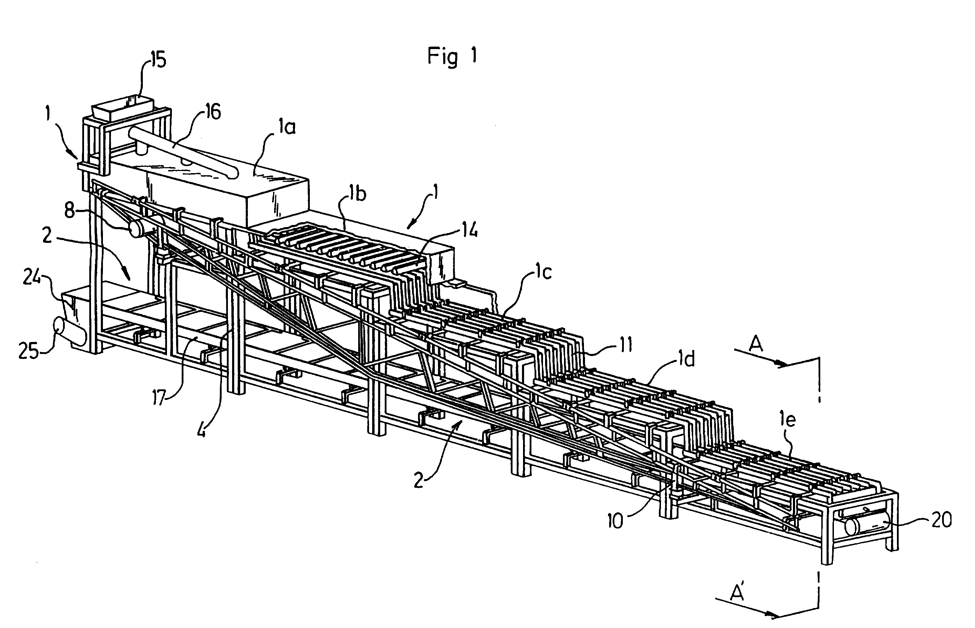

- la figure 1 est une vue en perspective schématique d'un mode de réalisation d'une installation de traitement conforme à l'invention,

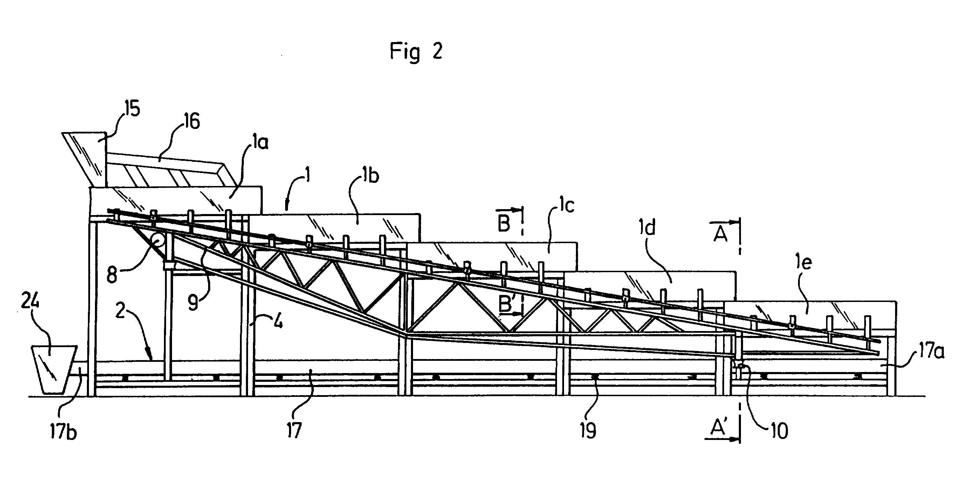

- la figure 2 en est une vue de côté,
- la figure 3 en est une coupe transversale par un plan AA',
- la figure 4 est une coupe transversale d'un étage du tunnel de cuisson par un plan BB',
- la figure 5 est une coupe longitudinale d'un étage du tunnel de cuisson selon une ligne brisée CC',

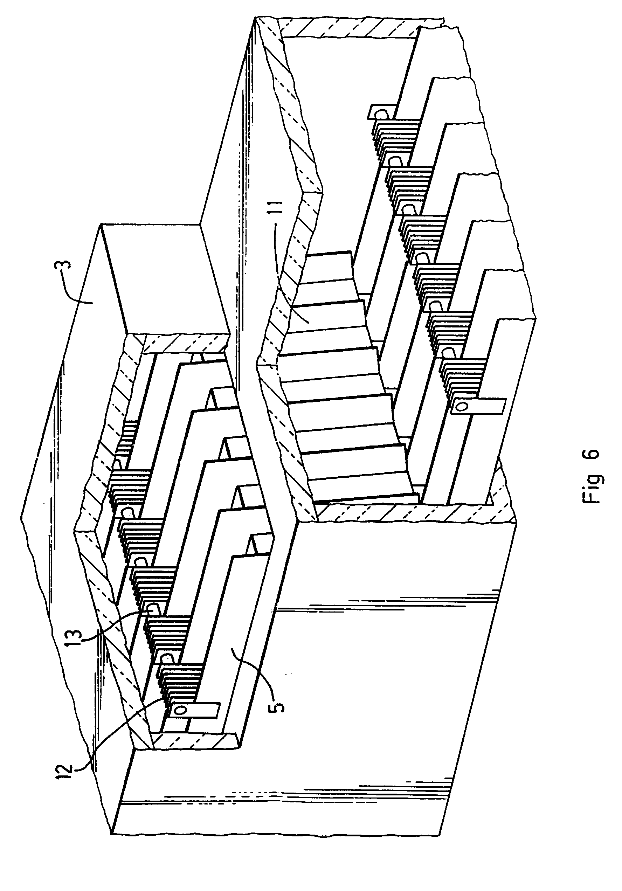

- la figure 6 est une vue de détail en perspective des moyens de passage d'un étage du tunnel de cuisson à l'étage inférieur,

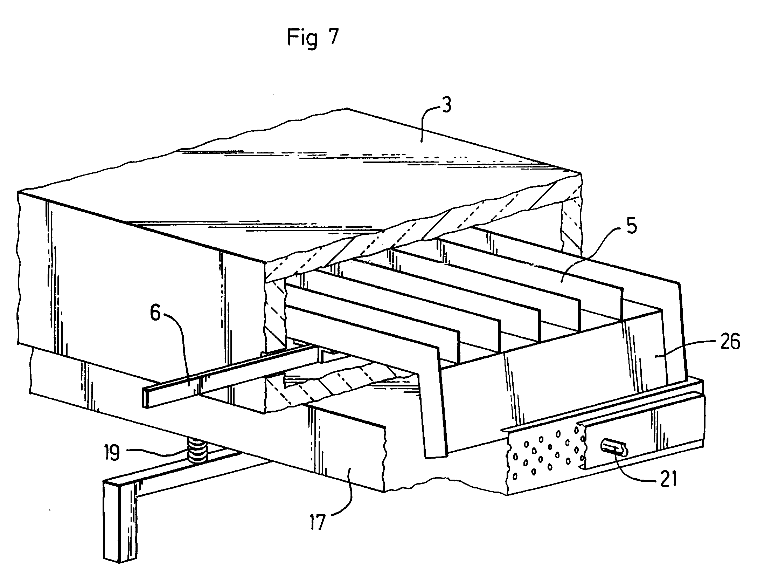

- la figure 7 est une vue de détail des moyens permettant le passage de la matière par gravité du tunnel de cuisson au dispositif de refroidissement, et des moyens d'injection d'air comprimé, froid et sec,
- la figure 8 est une coupe longitudinale partielle montrant en particulier le dispositif de refroidissement et ses rampes d'injection d'air comprimé.

L'installation de traitement représentée à titre d'exemple aux figures permet de préparer un liant hydraulique amélioré à partir d'une matière première pulvérulente à base de sulfate de calcium.

Cette installation comprend essentiellement d'une part, un tunnel de cuisson supérieur 1 constitué de plusieurs étages 1a, 1b... 1e disposés les uns à la suite des autres avec un décalage vertical vers le bas entre deux étages successifs, d'autre part, un dispositif de refroidissement inférieur 2.

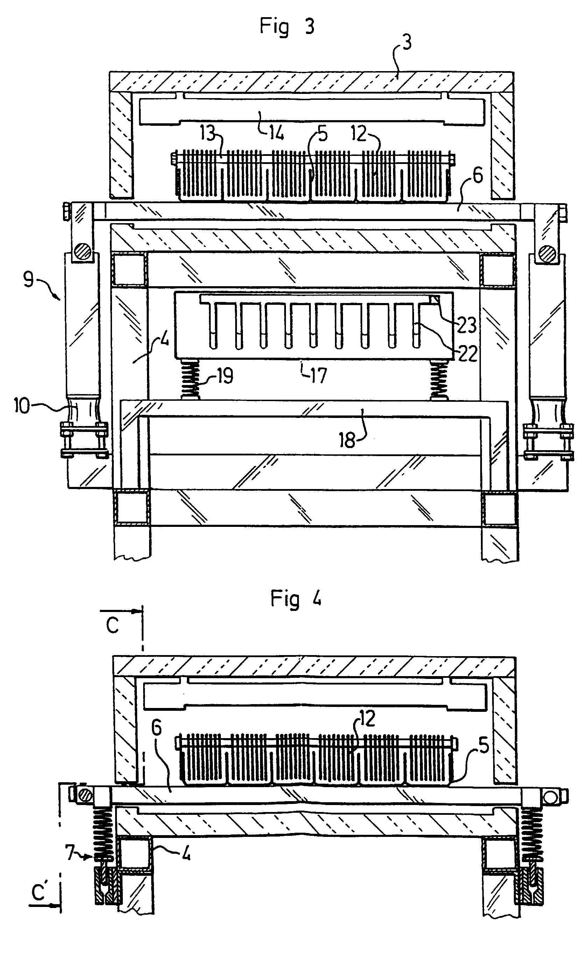

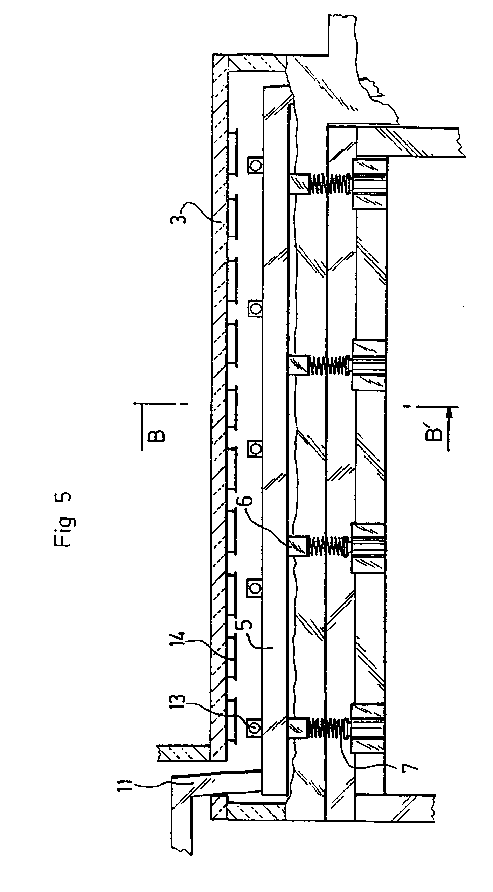

Chaque étage du tunnel de cuisson est constitué par des parois isolantes, résistantes à la chaleur, telles que 3, qui ferment le tunnel sur le côté, le dessus, le dessous et frontalement entre deux étages (figures 3, 4, 5). Ces parois sont soutenues par un bâti tubulaire 4.

Des goulottes longitudinales 5 sont disposées dans le tunnel pour contenir la matière pulvérulente et la guider depuis l'extrémité amont du tunnel de cuisson (correspondant à sa partie haute) et son extrémité aval (correspondant à sa partie basse). Ces goulottes juxtaposées sont portées par des supports 6 montés sur des moyens élastiques tels que systèmes à ressorts 7 et reliés à des moyens de mise en vibration réglables permettant de transmettre auxdites goulottes une vibration d'amplitude et fréquence réglables.

En l'exemple, un vibreur 8 du type à amplitude et fréquence réglables est associé à une membrure treillis 9 qui est fixée latéralement sur le bâti 4 par l'intermédiaire de blocs élastiques 10 du type "Silent block". Le vibreur met en vibration l'ensemble membrure 9, supports 6, goulottes 5, et assure un cheminement de la matière pulvérulente par vibration. Entre deux étages, les goulottes 5 se prolongent par des portions verticales ou très inclinées 11 qui jouent le rôle de moyens de passage par gravité de la matière d'un étage de goulottes à l'étage inférieur, la matière tombant en pluie d'un étage à l'autre.

Bien entendu, tout autre système de mise en vibration peut être prévu, en particulier une pluralité de vibreurs répartis le long du tunnel de cuisson pour mettre en vibration directement les supports de goulottes 6 (en l'absence de membrure 9).

Les goulottes contiennent des peignes tels que 12 en un matériau conducteur de la chaleur, afin de diviser localement la masse de matière et d'assurer un apport de chaleur au coeur de celle-ci par conduction. Ces peignes répartis le long des goulottes sont portés par des traverses 13 assujetties sur les flasques des goulottes latérales. L'étage supérieur la de goulottes peut ne pas comporter de peignes.

En outre, le tunnel de cuisson comprend des radiants de chauffage infrarouges tels que 14, qui sont chacun disposés transversalement au-dessus des goulottes de façon à irradier toute la largeur de goulottes. Ces radiants placés les uns près des autres sont dotés d'une alimentation électrique reliée à des moyens de régulation de la puissance émise, associés à des sondes de température de type classique (non représentées) disposées dans le tunnel de cuisson. L'étage inférieur le de goulottes ne comporte pas de radiants. Le nombre de radiants et leur puissance sont prévus de façon à permettre d'élever et maintenir la température des gaz dans le tunnel à une valeur comprise entre 400°C et 500°C et à porter la température moyenne au coeur de la matière à une valeur comprise entre 250°C et 300°C. L'ajustement précis des températures désiré peut être obtenu en régulant la puissance d'émission des radiants en corrélation avec la vitesse de cheminement de la matière.

Au-dessus de l'extrémité amont du tunnel de cuisson, est prévue une trémie 15 d'alimentation en matière première, qui est préchauffée par des moyens permettant de prélever des gaz chauds dans le tunnel à proximité de cette extrémité amont et de les transférer vers la matière contenue dans la trémie. En l'exemple, ces moyens sont très simplement constitués par un conduit 16 qui débouche dans la trémie 15 et prélève des gaz chauds à l'étage supérieur 1a du tunnel par trois bouches réparties le long de cet étage supérieur.

Par ailleurs, le dispositif de refroidissement 2 est agencé au-dessous du tunnel de cuisson 1 qui vient d'être décrit.

Ce dispositif comprend un bac 17, de forme allongée, qui est porté par des traverses 18 par l'entremise de moyens élastiques tels que systèmes à ressort 19. Ces traverses 18 sont solidaires du bâti 4. Ces moyens sont agencés de sorte que le bac soit légèrement incliné de son extrémité amont 17a vers son extrémité aval 17b. Un vibreur 20 du même type que le vibreur 8 permet de mettre le bac en vibration avec une amplitude et une fréquence réglables.

L'extrémité amont du bac 17 se prolonge au-delà des goulottes de l'étage 1e du tunnel de cuisson de façon que la matière pulvérulente tombe au-dessus d'une rampe 26 depuis lesdites goulottes dans le bac. A ce niveau, le dispositif est doté de moyens 21 d'injection d'air comprimé froid et sec, vers le rideau de matière qui tombe en pluie dans le bac. Il est à noter que ce rideau de matière crée un bouchon suffisant pour bloquer l'air chaud du tunnel de cuisson et éviter un passage de celui-ci dans le dispositif de refroidissement ; au contraire, l'air chaud a tendance à remonter dans le tunnel de cuisson de son extrémité aval vers son extrémité amont par un effet de tirage naturel, favorisé par la géométrie ascendante du tunnel de cuisson de l'aval vers l'amont, par la température plus basse dans les étages inférieurs, et par le prélèvement de gaz à l'étage supérieur 1e. Ainsi, dans le tunnel de cuisson, les gaz circulent à contre-sens par rapport à la matière pulvérulente, ce qui accroît les échanges solide/gaz.

La trempe thermique subie par la matière pulvérulente lors de son passage dans le dispositif de refroidissement est parachevé en injectant des flux d'air froid et sec dans le lit de matière en mouvement dans le bac 17.

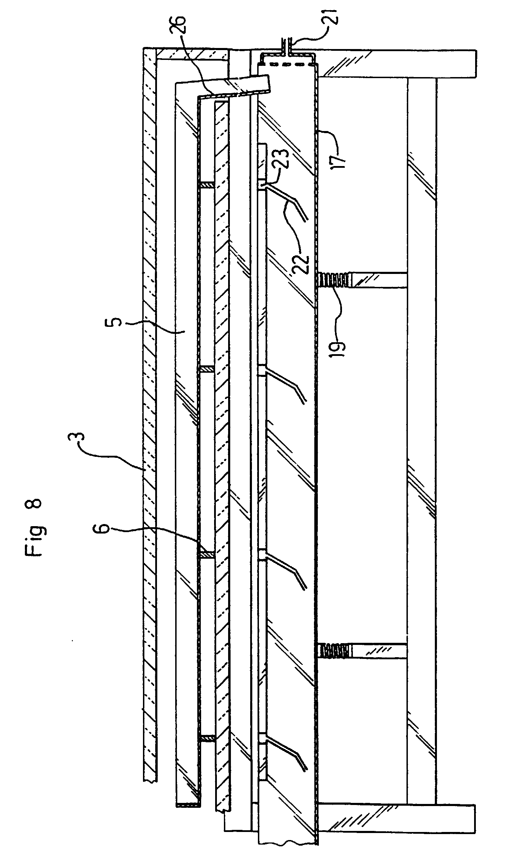

A cet effet, des rampes 22 d'injection d'air comprimé sont disposées dans le bac de façon à descendre au coeur du lit de matière, comme le montre la figure 8. Ces rampes sont inclinées dans le sens du déplacement de la matière et contribuent à mettre la matière en mouvement : agitation sur place conduisant à une sorte de suspension des particules dans le courant d'air froid, cheminement d'ensemble d'amont vers l'aval. Ces rampes sont alimentées par un réseau de conduits 23 raccordés à une alimentation d'air comprimé commune.

Les moyens d'injection précités permettent d'obtenir de bons échanges thermiques air/solide et une excellente efficacité de trempe. En pratique, le débit d'air comprimé froid et sec sera ajusté pour obtenir un refroidissement de la matière d'une valeur comprise entre 250°C-300°C à la sortie du tunnel de cuisson à une valeur inférieure à 100°C à la sortie du tunnel de refroidissement, la durée du refroidissement étant comprise entre 6 et 10 minutes environ.

Des moyens d'évacuation tels que trémie 24 pourvue d'une vis hélicoïdale d'extraction 25 permettent le recueil de la matière après traitement.

L'installation décrite permet de fabriquer un nouveau liant hydraulique à partir de sulfate de calcium, en privilégiant dans le tunnel de cuisson la formation d'anhydrite a de sulfate de calcium (la forme γ étant pratiquement absente) et en limitant, grâce à la trempe thermique réalisée dans le dispositif de refroidissement, l'évolution du produit issu de la cuisson.

Dans l'exemple de mise en oeuvre qui suit, la matière première était un phosphogypse provenant du Maroc, broyé pour fournir une poudre de granulométrie inférieure à 0,5 mm. Cette poudre présentait un taux d'humidité de 20 %.

La puissance des radiants 14 du tunnel de cuisson et le régime vibratoire du vibreur 8 sont réglés de façon que la poudre séjourne environ 12 minutes dans le tunnel de cuisson, que la température moyenne des gaz soit d'environ 480°C et la température moyenne au coeur de la matière de 250°C. Ce traitement thermique assure une déshydratation de la matière première et, dans l'atmosphère gazeuse chauffée contenant une partie de la vapeur d'eau libérée, une transformation d'une proportion élevée de ladite matière en anhydrite a de sulfate de calcium.

L'air comprimé injecté, d'une part sur le rideau de poudre tombant du tunnel de cuisson dans le dispositif de refroidissement, d'autre part par les rampes 22, présentait un taux d'humidité inférieur à 1 % et une température de 25°C. Le débit d'air a été ajusté de façon que la poudre à la sortie du tunnel de cuisson soit refroidie à la température ambiante dans le dispositif de refroidissement en dix minutes.

Une analyse des profils de température a permis de constater une montée de température de l'ordre de 20°C (au début du tunnel de refroidissement) qui est due à une certaine réhydratation exothermique du produit ; toutefois, celle-ci est très vite bloquée par la trempe et à la sortie du dispositif de refroidissement, le produit présente la composition suivante :
- anhydrite α de sulfate de calcium (anhydrite soluble) : 50 % en poids,
- bassanite : 50 % en poids,
- anhydrite γ de sulfate de calcium (anhydrite insoluble) : simples traces.

Cette composition a été mise en évidence par les analyses suivantes : analyse thermique pondérale, analyses diffractométriques, analyse aux rayons X, spectrométrie infrarouge.

La surface spécifique du produit a été mesurée par adsorption d'azote (méthode B.E.T.) et la valeur trouvée est de 5,96 m²/g (à comparer avec celle du ciment de l'ordre de 1 m²/g).

Les mêmes analyses ont été faites sur un échantillon de plâtre amélioré connu provenant d'Allemagne et fabriqué à partir de produits de désulfuration de centrale thermique. Les résultats obtenus pour ces plâtres améliorés sont les suivants :
- anhydrite α de sulfate de calcium : 8 %,
- bassanite : 37 % en poids,
- anhydrite γ de sulfate de calcium : 55 % La surface spécifique mesurée était de : 3,64 m²/g.

La surface spécifique élevée du liant conforme à l'invention et sa forte proportion en anhydrite soluble α donnent aux produits fabriqués par prise de ce liant (en l'absence ou en présence de charges) de remarquables qualités mécaniques et de tenue au feu.

Ainsi, le produit obtenu par prise du liant conforme à l'invention visée ci-dessus (sans charge) a été soumis à des tests d'inflammabilité selon la norme NF P 92-507 (éprouvettes de 0,30 m/0,40 m soumises au rayonnement d'une source de chaleur constante). La détermination des quatre indices prévus dans cette norme (indice d'inflammation, indice de développement, indice de longueur maximal de flamme, indice de combustibilité) a permis de classer le produit dans la catégorie la plus performante MO des six catégories prévues par la norme.

En outre, des essais de résistance selon la norme ont donné les résultats suivants :
- résistance à la compression : 280 bars,
- résistance à la flexion : 65 bars.

De plus, des essais qualitatifs en situation immergée ont montré que le produit gardait de bonnes qualités de résistance dans cette situation.

## Revendications

1. Procédé de traitement d'une matière première pulvérulente à base de sulfate de calcium naturel ou de synthèse en vue de préparer un liant hydraulique comprenant un mélange stable d'anhydrite α et de bassanite, dans lequel la proportion pondérale d'anhydrite α est supérieure à 35 %, caractérisé en ce que l'on combine les deux étapes de traitement successives suivantes :
(a) on chauffe la matière pulvérulente à une température sensiblement comprise entre 220°C et 360°C en présence de vapeur d'eau dans des conditions appropriées pour former majoritairement du sulfate de calcium de variété α,
(b) on fait subir à la matière ainsi chauffée une trempe thermique consistant à la refroidir d'au moins 150°C en un temps inférieur à 15 minutes au moyen d'un gaz froid et sec injecté sous pression au coeur de celle-ci.

2. Procédé de traitement selon la revendication 1, caractérisé en ce que l'opération de trempe (b) est mise en oeuvre de façon à amener la matière à une température inférieure à 100°C en un temps compris entre 6 et 12 minutes.

3. Procédé de traitement selon l'une des revendications 1 ou 2, caractérisé en ce que l'opération de trempe (b) est réalisée au moyen d'air comprimé froid et sec, injecté à plusieurs emplacements dans la matière en mouvement, le débit d'air étant ajusté pour obtenir la vitesse de refroidissement appropriée.

4. Procédé de traitement selon la revendication 3, caractérisé en ce que, à l'issue de l'opération (a), la matière chauffée est envoyée en pluie d'un niveau supérieur à un niveau inférieur où elle est amenée par vibration à cheminer en lit, l'opération de trempe (b) étant réalisée, d'une part, en envoyant un premier flux d'air froid et sec sur le rideau de matière tombant en pluie entre le niveau supérieur et le niveau inférieur, d'autre part, en injectant des flux d'air froid et sec au coeur du lit de matière en cours de cheminement au niveau inférieur.

5. Procédé de traitement selon l'une des revendications 1 à 4, caractérisé en ce qu'on contrôle, préalablement, le taux d'humidité de la matière première et on ajuste, le cas échéant, ce taux à une valeur sensiblement comprise entre 12 % et 25 %, l'opération de cuisson (a) étant mise en oeuvre en amenant la matière pulvérulente à cheminer en lit agité dans une atmosphère gazeuse confinée contenant au moins une partie de la vapeur d'eau libérée par la matière, et en chauffant l'ensemble dans des conditions propres à élever la température des gaz au-dessus du lit de matière à une valeur comprise entre 400°C et 500°C, et à porter la température moyenne au coeur de la matière à une valeur supérieure à 250°C et inférieure à 300°C.

6. Procédé de traitement selon la revendication 5, caractérisé en ce que le chauffage de l'opération (a) est réalisé au moyen de radiants infrarouges (14) disposés au-dessus du lit de matière, la puissance d'émission desdits radiants étant régulée en corrélation avec la vitesse de cheminement du lit de matière pour obtenir les valeurs appropriées, d'une part, de la température des gaz au-dessus du lit, d'autre part, de la température au coeur de la matière.

7. Procédé de traitement selon l'une des revendications 5 ou 6, caractérisé en ce que, au cours de l'opération de cuisson (a), la matière est amenée à cheminer par vibration dans des goulottes juxtaposées (5), dans lesquelles sont insérés des peignes (12) en matériau conducteur de la chaleur en vue de diviser le lit de matière et d'assurer un apport de chaleur au coeur de celle-ci par conduction.

8. Procédé de traitement selon la revendication 7, caractérisé en ce que, au cours de l'opération de cuisson (a), la matière cheminant dans les goulottes est amenée à plusieurs reprises à tomber en pluie d'un étage de goulottes à un étage de goulottes inférieures, une partie des gaz chauds étant récupérée en partie haute pour servir de préchauffage de la matière première.

9. Installation pour le traitement d'une matière première se présentant sous forme pulvérulente telle que sulfate de calcium naturel ou de synthèse en vue de mettre en oeuvre le procédé conforme à l'une des revendications 1 à 8 pour préparer un liant hydraulique, caractérisée en ce qu'elle comprend, en combinaison, un tunnel de cuisson (1) ayant une extrémité amont et une extrémité aval, des moyens (15) d'alimentation en matière première de l'extrémité amont dudit tunnel de cuisson, des goulottes longitudinales (5) juxtaposées dans le tunnel de cuisson et aptes à contenir la matière, des peignes (12) en un matériau conducteur de la chaleur insérés dans les goulottes et de forme adaptée pour diviser la masse de matière contenue dans celles-ci, des moyens réglables (8, 9) de mise en vibration desdites goulottes adaptés pour engendrer un cheminement de la matière de l'extrémité amont vers l'extrémité aval, des moyens de chauffage (14), de puissance réglable, situés au-dessus des goulottes dans le tunnel de cuisson, un dispositif de refroidissement (2) ayant une extrémité amont et une extrémité aval et situé à un niveau inférieur par rapport au tunnel de cuisson, un bac (17) de forme allongée s'étendant dans le dispositif de refroidissement pour contenir la matière, des moyens réglables (20) de mise en vibration dudit bac adaptés pour engendrer un cheminement de la matière de l'extrémité amont vers l'extrémité aval, des moyens (26) de passage par gravité de la matière de l'extrémité aval du tunnel de cuisson dans l'extrémité amont du dispositif de refroidissement, des moyens (21) d'injection d'air comprimé sec et froid au niveau des moyens de passage précités, des moyens (22, 23) d'injection d'air comprimé sec et froid dans le dispositif de refroidissement, et des moyens (24, 25) d'évacuation de la matière à l'extrémité aval du dispositif de refroidissement.

10. Installation selon la revendication 9, caractérisée en ce que le tunnel de cuisson comprend plusieurs étages de goulottes (1a-1e) et des moyens (11) de passage par gravité de la matière d'un étage de goulottes à l'étage de goulottes inférieur.

11. Installation selon l'une des revendications 9 ou 10, caractérisée en ce que les goulottes (5) sont portées par des supports (6) montés sur des moyens élastiques (7) et reliés aux moyens de mise en vibration du type à amplitude et fréquence de vibration réglables.

12. Installation selon l'une des revendications 9, 10 ou 11, caractérisée en ce que les moyens de chauffage du tunnel de cuisson comprennent des radiants infrarouges (14) ayant une alimentation électrique reliée à des moyens de régulation de la puissance émise associés à des sondes de température disposées dans ledit tunnel de cuisson.

13. Installation selon l'une des revendications 9, 11 ou 12, caractérisée en ce qu'elle comprend, à proximité de l'extrémité amont du tunnel de cuisson, des moyens (16) de prélèvement de gaz associés à des moyens de transfert de ces gaz vers la matière contenue dans les moyens (15) d'alimentation en vue de son préchauffage.

14. Installation selon l'une des revendications 9 à 13, caractérisée en ce que les moyens d'injection d'air comprimé dans le dispositif de refroidissement comprennent des rampes d'injection d'air (22) disposées dans le bac précité.

15. Liant hydraulique à base de sulfate de calcium, caractérisé en ce qu'il comprend un mélange stable d'anhydrite a et de bassanite, dans lequel la proportion pondérale d'anhydrite α est supérieure à 35 %.

16. Liant hydraulique selon la revendication 15, caractérisé en ce que la proportion pondérale d'anhydrite α est comprise entre 40 % et 65 %.

17. Liant hydraulique selon la revendication 16, conduisant après sa prise aux caractéristiques suivantes des produits obtenus :
- tenue au feu : inflammabilité classée dans la catégorie MO suivant la norme NF P 92-507,
- résistance à la compression : entre 250 et 300 bars
- résistance à la flexion : entre 55 et 70 bars.

## Patentansprüche

1. Aufbereitungsverfahren für einen pulverförmigen Rohstoff auf der Basis von natürlichem oder synthetischem Kalziumsulfat im Hinblick auf die Zubereitung eines hydraulischen Bindemittels, in dem das Gewichtsverhältnis von Anhydrit α höher als 35 % ist, gekennzeichnet durch die Kombination der beiden nachstehenden aufeinanderfolgenden Aufbereitungsgänge:
(a) Erhitzen des pulverförmigen Rohstoffs auf eine Temperatur im wesentlichen zwischen 220°C und 360°C in Gegenwart von Wasserdampf unter den zweckmäßigen Bedingungen, um hauptsächlich Kalziumsulfat der Form α zu bilden,
(b) Unterziehen des so erhitzten Rohstoffs einer thermischen Abschreckung beruhend auf den Abkühlen von mindestens 150°C in einer Zeit von weniger als 15 Minuten mittels eines kalten und trockenen Gases, welches unter Druck in den Rohstoff eingeblasen wird.

2. Aufbereitungsverfahren gemäß Anspruch 1, dadurch gekennzeichnet, daß der Abschreckungsvorgang (b) so durchgeführt wird, daß der Rohstoff in einer Zeit von 6 bis 12 Minuten auf eine Temperatur von unter 100°C gebracht wird.

3. Aufbereitungsverfahren gemäß einem der Ansprüche 1 oder 2, dadurch gekennzeichnet, daß der Abschreckungsvorgang (b) mittels kalter und trockener Druckluft realisiert wird, welche an mehreren Stellen in den in Bewegung befindlichen Rohstoff eingeblasen wird, wobei der Luftdurchsatz reguliert ist, um die geeignete Abkühlzeit zu erreichen.

4. Aufbereitungsverfahren gemäß Anspruch 3, dadurch gekennzeichnet, daß am Ende des Vorgangs (a) der erhitzte Rohstoff von einer oberen Ebene auf eine untere Ebene abgeregnet, wo er unter Rütteln in einem Bett fließt und wobei der Abschreckungsvorgang (b) einerseits durch Einblasen eines ersten kalten und trockenen Luftstroms auf den Schleier des abregnenden Rohstoffs zwischen der oberen und der unteren Ebene und andererseits durch Einblasen von kalten und trockenen Luftströmen in das Rohstoffbett, das sich auf der unteren Ebene in Bewegung befindet, realisiert wird.

5. Aufbereitungsverfahren gemäß einem der Ansprüche 1 bis 4, dadurch gekennzeichnet, daß vorher der Feuchtigkeitsgehalt des Rohstoffs kontrolliert und dieser Gehalt gegebenenfalls auf einen Wert von im wesentlichen zwischen 12 % und 25 % abgeglichen wird, wobei der Erhitzungsvorgang (a) dadurch durchgeführt wird, daß der pulverförmige Rohstoff auf einem Rüttelbett in einer geschlossenen, gashaltigen und mindestens einen Teil des von dem Rohstoff freigesetzten Wasserdampfs enthaltenden Atmosphäre befördert, das Ganze unter die Erhöhung der Temperatur der Gase über dem Rohstoffbett auf einen Wert zwischen 400°C und 500°C begünstigenden Bedingungen erhitzt und die mittlere Temperatur im Innem des Rohstoffbettes auf einen Wert von über 250°C und unter 300°C gebracht wird.

6. Aufbereitungsverfahren gemäß Anspruch 5, dadurch gekennzeichnet, daß die Heizung des Vorgangs (a) mittels über dem Rohstoffbett angeordneten Infrarotstrahler (14) gewährleistet ist, wobei die Strahlungsleistung der besagten Strahler im Zusammenhang mit der Fördergeschwindigkeit des Rohstoffbetts reguliert wird, um zweckmäßige Werte einerseits der Temperatur der Gase über dem Rohstoffbett und andererseits der Temperatur im Innern des Rohstoffs zu erhalten.

7. Aufbereitungsverfahren gemäß einem der Ansprüche 5 oder 6, dadurch gekennzeichnet, daß im Lauf des Erhitzungsvorgangs (a) der Rohstoff durch Vibration in nebeneinander angeordneten Rutschen (5), in die Kämme (12) aus wärmeleitendem Material zum Spalten des Rohstoffbetts und Zuführen der Wärme durch Konduktion in sein Inneres eingefügt sind,

8. Aufbereitungsverfahren gemäß Anspruch 7, dadurch gekennzeichnet, daß im Lauf des Erhitzungsvorgangs (a) der in den Rutschen fließende Rohstoff veranlaßt wird, in Regenform von einer Rutschenstufe in eine Stufe darunter angeordneten Rutschen zu fallen, wobei ein Teil der heißen Gase im oberen Teil abgezogen wird, um zum Vorwärmen des Rohstoffs zu dienen.

9. Einrichtung zur Aufbereitung eines Rohstoffs in Pulverform, wie natürliches oder synthetisches Kalziumsulfat, im Hinblick auf die Anwendung des Verfahrens gemäß einem der Ansprüche 1 bis 8, um ein hydraulisches Bindemittel zuzubereiten, dadurch gekennzeichnet, daß sie gebildet wird aus der Kombination von: einem Heiztunnel (1) mit einem oberen Ende und einem unteren Ende, Zuführmitteln (15) des Rohstoffs am oberen Ende des besagten Heiztunnels, im Heiztunnel nebeneinander angeordneten Längsrutschen (5), in die Rutschen eingeführten Kämmen (12) aus wärmeleitendem Material in einer zur Spaltung der Rohstoffmasse in diesen Rutschen zweckmäßigen Form, einstellbaren Mitteln (8, 9) zum Vibrieren der besagten Rutschen, geeignet die Förderung des Rohstoffs von dem oberen Ende zu dem unteren Ende zu bewirken, Heizmitteln (14) mit einstellbarer Leistung, die über den Rutschen im Heiztunnel angebracht sind, einer Kühlvorrichtung (2) mit einem oberen Ende und einem unteren Ende und angebracht auf einer niedrigeren Ebene in Bezug auf den Heiztunnel, einem Behälter (17) in länglicher Form, der sich in die Kühlvorrichtung erstreckt zum Zusammenhalten des Rohstoffs, einstellbaren Mitteln (20) zum Vibrieren des besagten Behälters, um eine Förderung des Rohstoffs von dem oberen Ende zu dem unteren Ende zu bewirken, Mitteln (26) zur Überführung durch Schwerkraft des Rohstoffs von dem unteren Ende des Heiztunnels in das obere Ende der Kühlvorrichtung, Mitteln (21) zum Einblasen von kalter und trockener Druckluft auf Ebene der vorgenannten Überführungsmittel, Mitteln (22, 23) zum Einblasen von kalter und trockener Druckluft in die Kühlvorrichtung und Mitteln (24, 25) zum Abführen des Rohstoffs am unteren Ende der Kühlvorrichtung.

10. Einrichtung gemäß Anspruch 9, dadurch gekennzeichnet, daß der Heiztunnel mehrere Rutschenstufen (1a - 1e) und Mittel (11) zur Überführung durch Schwerkraft des Rohstoffs von einer Rutschenstufe in die darunter liegende Rutschenstufe aufweist.

11. Einrichtung gemäß einem der Ansprüche 9 oder 10, dadurch gekennzeichnet, daß die Rutschen (5) von auf elastische Mittel (7) montierten und mit für Amplituden- und Frequenzvibration einstellbaren Vibriermitteln verbundenen Halterungen (6) getragen werden.

12. Einrichtung gemäß einem der Ansprüche 9, 10 oder 11, dadurch gekennzeichnet, daß die Heizungsmittel des Heiztunnels aus Infrarotstrahlern (14) mit einer an Mittel zur Regelung der abgestrahlten Leistung und an in dem besagten Heiztunnel angebrachten Temperatursonden verbundenen Stromversorgung bestehen.

13. Einrichtung gemäß einem der Ansprüche 9, 11 oder 12, dadurch gekennzeichnet, daß sie in Nähe des oberen Endes des Heiztunnels Mittel (16) zur Gasentnahme und zugehörige Mittel zum Transfer dieser Gase zum in den Zuführungsmitteln (15) enthaltenen Rohstoff im Hinblick auf dessen Vorwärmung aufweist.

14. Einrichtung gemäß einem der Ansprüche 9 bis 13, dadurch gekennzeichnet, daß die Mittel zum Einblasen der Druckluft in der Kühlvorrichtung in dem besagten Behälter angebrachte Lufteinblasrampen (22) aufweisen.

15. Hydraulisches Bindemittel auf der Basis von Kalziumsulfat, dadurch gekennzeichnet, daß es ein stabiles Gemisch von Anhydrit α und Bassanit enthält, in dem das Gewichtsverhältnis von Anhydrit α höher als 35 % ist.

16. Hydraulisches Bindemittel gemäß Anspruch 15, dadurch gekennzeichnet, daß das Gewichtsverhältnis von Anhydrit α zwischen 40 % und 65 % liegt.

17. Hydraulisches Bindemittel gemäß Anspruch 16, welches nach Abbinden zu Produkten mit den folgenden Eigenschaften führt:
- Feuerfestigkeit: Brennbarkeit eingestuft in Kategorie MO entsprechend Norm NF P 92-507,
- Druckfestigkeit: zwischen 250 und 300 Bar,
- Biegefestigkeit: zwischen 55 und 70 Bar.

## Claims

1. Process for the treatment of an initial pulverulent material based on natural or synthetic calcium sulfate so as to prepare a hydraulic binder comprising a stable mixture of α anhydrite and bassanite, in which the weight proportion of α anhydrite is greater than 35%, characterized in that the two following successive treatment steps are performed in combination:
(a) heating the pulverulent material to a temperature substantially comprised between 220°C and 360°C in the presence of water vapor under conditions suitable for forming mostly calcium sulfate of α variety,
(b) subjecting the material thus heated to thermal quenching consisting in cooling by at least 150°C in a temperature less than 15 minutes by means of a cold dry gas injected under pressure within the latter.

2. Treatment process according to claim 1, characterized in that the quenching operation (b) is carried out so as to bring the material to a temperature below 100°C in a temperature comprised between 6 and 12 minutes.

3. Treatment process according to one of claims 1 or 2, characterized in that the quenching operation (b) is carried out by means of cold dry compressed air, injected at several places within the moving material, the flow rate of air being adjusted to obtain the suitable cooling speed.

4. Treatment process according to claim 3, characterized in that, at the end of operation (a), the heated material is poured from an upper level to a lower level at which it is brought by vibration to travel in a bed, the quenching operation (b) being carried out on the one hand by blowing a first flow of cold and dry air through the curtain of falling material, between the upper level and the lower level, on the other hand by injecting flows of cold dry air into the interior of said material in the course of movement to the lower level.

5. Treatment process according to one of claims 1 to 4, characterized in that the humidity content of the initial material is at first determined and as the case may be this content is adjusted to a value substantially comprised between 12% and 25%, the heating operation (a) being carried out by causing the pulverulent material to flow in an agitated bed under a confined gaseous atmosphere containing at least one part of the water vapor freed from the material, and by heating the assembly under suitable conditions to raise the temperature of the gases above the bed of material to a value comprised between 400°C and 500°C, and bringing the mean temperature within the material to a value higher than 250°C and lower than 300°C.

6. Treatment process according to claim 5, characterized in that the heating operation (a) is carried out by means of infrared radiant heaters (14) disposed above the bed of material, the emission power of said radiant heaters being adjusted in correlation with the speed of travel of the bed of material to obtain suitable values, on the one hand, of the temperature of the gases above the bed, and on the other hand of the temperature at the center of the material.

7. Treatment process according to one of claims 5 or 6, characterized in that, in the course of the heating operation (a), the material is made to travel by vibration in juxtaposed troughs (5), in which are inserted combs (12) of a heat conductive material so as to divide the bed of material and to ensure heat transfer into the interior of the latter by conduction.

8. Treatment process according to claim 7, characterized in that, in the course of the heating operation (a), the material traveling in the troughs is made on several occasions to fall by gravity from one trough stage to a lower trough stage, a portion of the hot gases being recovered in the upper portion to serve for preheating the initial material.

9. Installation for the treatment of an initial material present in pulverulent form such as natural or synthetic calcium sulfate so as to practice the invention according to one of claims 1 to 8 to prepare a hydraulic binder, characterized in that it comprises, in combination, a heating tunnel (1) having an upstream and a downstream end, means (15) to supply initial material to the upstream end of said heating tunnel, longitudinal troughs (5) juxtaposed in the heating tunnel and adapted to contain the material, combs (12) of a heat conductive material inserted in the troughs and of such shape as to divide the mass of material contained in the latter, adjustable means (8, 9) for vibrating said troughs to cause movement of the material from the upstream end toward the downstream end, heating means (14), of adjustable power, located above the troughs in the heating tunnel, a cooling device (2) having an upstream end and a downstream end and located at a lower level relative to the heating tunnel, a receptacle (17) of elongated form extending in the cooling device to contain the material, adjustable means (20) for vibrating said receptacle, adapted to give rise to movement of the material from the upstream toward the downstream end, means (26) for passage by gravity of the material from the downstream end of the heating tunnel into the upstream end of the cooling device, means (21) for injecting cold dry compressed air into the mentioned passage means, means (22, 23) for the injection of cold compressed air into the cooling device, and means (24, 25) for removing the material from the downstream end of the cooling device.

10. Installation according to claim 9, characterized in that the heating tunnel comprises several stages of troughs (1a-1e) and means (11) for the passage by gravity of the material from one trough stage to the lower trough stage.

11. Installation according to one of claims 9 or 10, characterized in that the troughs (5) are carried by supports (6) mounted on resilient means (7) and connected to the vibration means of adjustable amplitude and frequency of vibration.

12. Installation according to one of claims 9, 10 or 11, characterized in that the heating means of the heating tunnel comprise infrared radiant heaters (14) having an electrical support connected to adjustment means for the power emitted associated with temperature probes disposed in said heating tunnel.

13. Installation according to one of claims 9, 11 or 12, characterized in that it comprises, adjacent the upstream end of the heating tunnel, means (16) for removing gas associated with transfer means for this gas toward the material contained in the supply means (15) for its preheating.

14. Installation according to one of claims 9 to 13, characterized in that the means for injecting compressed air into the cooling device comprise an air injection manifold (22) disposed in the mentioned receptacle.

15. Hydraulic binder based on calcium sulfate, characterized in that it comprises a stable mixture of a anhydrite and of bassanite, in which the weight proportion of a anhydrite is greater than 35%.

16. Hydraulic binder according to claim 15, characterized in that the weight proportion of a anhydrite is comprised between 40% and 65%.

17. Hydraulic binder according to claim 16, having after setting the following characteristics of the obtained products:
- fire resistance: inflammability classed in the category MO according to the Standard NF P 92-507,
- compression resistance: between 250 and 300 bars
- bending resistance: between 55 and 70 bars.
